Europäisches Patentamt

European Patent Office

Office européen des brevets

(11) Veröffentlichungsnummer: **0 028 671**
**B1**

(12) **EUROPÄISCHE PATENTSCHRIFT**

(45) Veröffentlichungstag der Patentschrift: **15.05.85**

(21) Anmeldenummer: **80103635.1**

(22) Anmeldetag: **27.06.80**

(51) Int. Cl.⁴: **F 16 L 13/14, F 16 B 2/14, F 16 B 7/00, B 21 D 41/02**

(54) **Rohranschluss zum Verbinden von Rohren mit Flanschen, Voll- oder Hohlprofilen und Verfahren zur Herstellung des Rohranschlusses.**

(30) Priorität: **10.11.79 DE 2945474**

(43) Veröffentlichungstag der Anmeldung:
**20.05.81 Patentblatt 81/20**

(45) Bekanntmachung des Hinweises auf die Patenterteilung:
**15.05.85 Patentblatt 85/20**

(84) Benannte Vertragsstaaten:
**AT BE CH FR GB IT LI LU NL SE**

(56) Entgegenhaltungen:
**AT-B- 328 806**
**DE-A-2 557 628**
**DE-A-2 817 249**
**DE-B-1 625 916**
**FR-A-2 256 363**
**US-A-3 784 235**
**US-A-4 127 344**

(73) Patentinhaber: **VEREINIGTE ALUMINIUM-WERKE AKTIENGESELLSCHAFT**
**Georg-von-Boeselager-Strasse 25**
**D-5300 Bonn 1 (DE)**

(72) Erfinder: **Bergheim, Hans**
**Am Wichelshof 34**
**D-5300 Bonn 1 (DE)**
Erfinder: **Griep, Winfried**
**Kirchfeldstrasse 1**
**D-5300 Bonn 3 (DE)**

(74) Vertreter: **Müller-Wolff, Thomas, Dipl.-Ing.**
**c/o Vereinigte Aluminium-Werke AG**
**Patentabteilung Postfach 2468**
**D-5300 Bonn 1 (DE)**

Courier Press, Leamington Spa, England.

**Beschreibung**

Die Erfindung betrifft einen Rohranschluß zum Verbinden von Rohren mit Flanschen, Voll- oder Hohlprofilen, mit einem zu verbindenden Rohr und einem Rohranschlußteil, das eine Bohrung aufweist, die an ihrer Innenwandung ein konisch, kegelig o. dgl. sich ausweitendes Ende aufweist, in das der Endabschnitt des zu verbindenden Rohres in Zusammenwirken mit einer in das Rohranschlußteil eingesetzten stirnseitig am Rohranschlußteil anliegenden Hülse eindrückbar ist.

Es ist bekannt, Rohranschlüsse durch Löten oder Schweissen herzustellen. Diese thermischen Verbindungsverfahren sind verhältnismäßig aufwendig und haben insbesondere bei Aluminiumwerkstoffen im Bereich der Verbindungsstelle (Wärmeeinflußzone) zwangsläufig einen unerwünschten Festigkeitsabfall zur Folge. Diesen nachteilen muß bei hochbeanspruchten Teilen daher durch größere Wandstärken, Versteifungen oder durch Tempern entgegengewirkt werden.

Es ist auch bekannt, Rohranschlüsse durch Kleben herzustellen. Da die Festigkeit dieser Verbindungen insbesondere bei dynamischer Beanspruchung häufig nicht ausreicht, werden zusätzlich Feingewinde in die Anschlußteile eingeschnitten. Diese kombinierte Befestigungsart ist jedoch nicht absolut verdrehsicher und daher für hochbeanspruchte Anschlußteile nicht immer ausreichend.

Durch die DE—A 2 557 628 ist ein Rohranschluß zum Verbinden von Rohren mit einem Hohlkörper bekannt, mit einem zu verbindenden Rohr und einem Rohranschlußteil, das eine Bohrung aufweist, die an ihrer Innenwandung ein konisch, kegelig o. dgl. sich ausweitendes Ende aufweist, in das der Endabschnitt des zu verbindenden Rohres im Zusammenwirken mit einer in das Rohranschlußteil eingesetzten stirnseitig am Rohranschlußteil anliegenden Hülse eindrückbar ist. Mit dieser Ausbildung ist jedoch bei geringsten Wandstärken keine hochfeste und lagebestimmte Verbindung ohne zusätzliche Versteifungsteile zu schaffen. Die Befestigung des Endes eines Innenrohres in einem Hohlkörper erfolgt bei dem bekannten Rohranschluß dadurch, daß mittels eines Hilfsdorns ein im Bereich des Innenrohres angeordneter und das Innenrohrende stirnseitig umgreifender, verhältnismäßig kurzer Winkelring zusammen mit dem Innenrohrende aufgeweitet und in eine Ausnehmung des aufgesteckten Hohlkörpers hineingedrückt wird. Voraussetzung dabei ist aber ein beidseitiger Zugang zur Verbindungsstelle.

Aufgabe der vorliegenden Erfindung ist es, ein Rohransclußteil zum Verbinden von Rohren mit Flanschen, Voll- oder Hohlprofilen zu schaffen, das bei geringsten Wandstärken eine hochfeste, lagebestimmte Verbindung ohne zusätzliche Versteifungsteile ermöglicht. Erfindungsgemäß wird dies dadurch erreicht, daß zwischen einen Außenrohr des Rohranschlußteiles sowie einer in dieses eingesetzten und stirnseitig am Rohranschlußteil anliegenden, steifen Hülse ein zylindrischer Ringspalt mit konisch, kegelig o. dgl. sich erstreckendem inneren Ende ausgebildet und in diesem das zu verbindende Rohr als Innenrohr mit seiner Stirnfläche am Rohranschlußteil anliegend mit geringer Toleranz (spielfrei) gehalten ist.

In vorteilhafter Weise kann zwischen dem Innenrohr und der Hülse sowie zwischen Innenrohr und Außenrohr eine Verklebung hergestellt werden. Die Aussparungen dienen der Aufnahme überschüssigen Klebstoffs und ergeben sich durch die Aufweitung der Rohre. Das Material der Rohranschlußteile besteht bevorzugt aus Aluminium und seinen Legierungen. Durch das Aufspreizen der Hülse wird die wirksame Oberfläche der Verbindungsteile vergrößert und dadurch die Haftung zwischen den Teilen verbessert. Die Anbringung eines Gewindes zwischen dem Rohranschlußteil und der Hülse ermöglicht eine kurze Baulänge des Rohranschlusses, da das Gewinde zusätzliche Kräfte übernehmen kann. Die Verwendung eines Zentrierstückes im Rohranschlußteil ermöglicht eine noch bessere Zentrierung der Verbindungsteile. Der Rohranschluß kann aus beliebigen Querschnitten, zum Beispiel viereckig oder oval, hergestellt werden. Im folgenden wird die Erfindung anhand mehrerer Ausführungsbeispiele näher erläutert. Es zeigen

Figur 1 Längsschnitt durch einen erfindungsgemäßen Rohranschluß

Figur 2 Querschnitt des in Figur 1 dargestellten Rohranschlusses

Figur 3 Längsschnitt gemäß Schnittlinie A—A nach Fig. 2

Figur 4 Längsschnitt durch eine Hülse

Figur 5 Längsschnitt durch ein Innenrohr

Figur 6 Längsschnitt durch eine besondere Ausführungsform des Rohranschlusses mit Verschraubung

Figur 7 Querschnitt durch das Außenrohr gemäß Figur 6

Figur 8 Längsschnitt durch das Außenrohr entlang Schnittlinie B—B der Figur 7

Figur 9 Längsschnitt durch eine Hülse gemäß Figur 6

Figur 10 Längsschnitt durch ein Innenrohr gemäß Figur 6

Figur 11 Querschnitt durch ein Innenrohr

Figur 12, Figur 13, Figur 14 Längschnitt durch weitere Ausbildungen des Rohranschlusses.

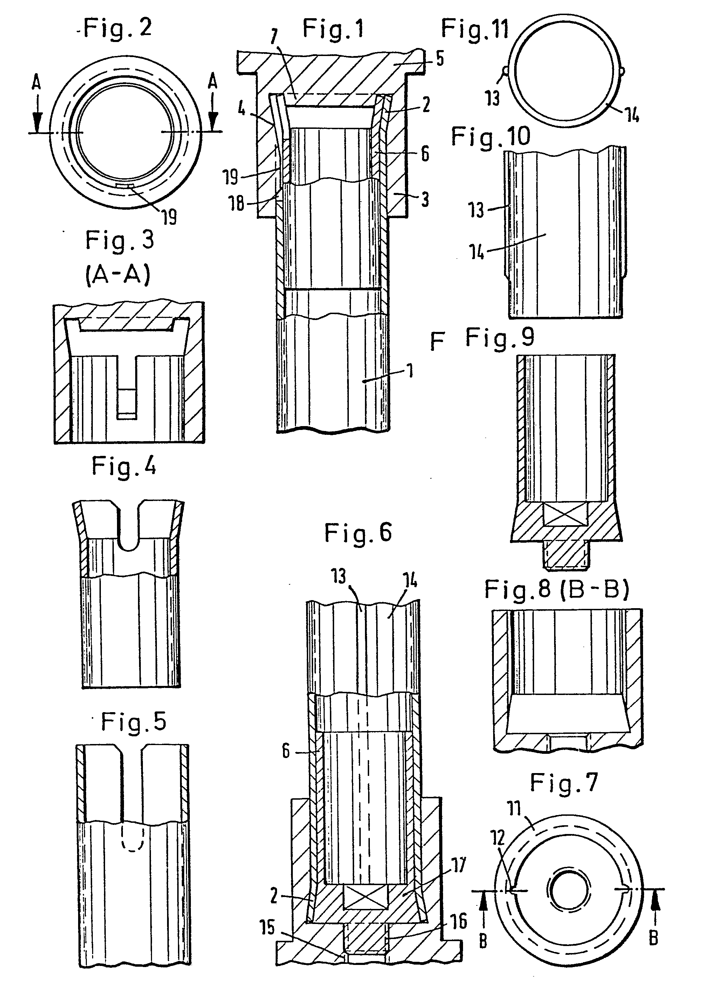

In Fig. 1 ist der erfindungsgemäße Rohranschluß gezeigt, bestehend aus einem Innenrohr 1 mit einem aufgeweiteten Endteil 2, einem Außenrohr 3 mit Hinterschneidungen 4 und einer Hülse 6 mit einem keilförmigen Ende und einem Schaftende. In dem dargestellten Beispiel wird durch den Rohranschluß das Innenrohr 1 mit einem Rohranschlußteil 5 verbunden.

Aus Fig. 1 ist ferner zu erkennen, daß die Hülse 6 auf einem Zentrierstück 7 des Rohranschlußteils 5 aufgesteckt ist. Hiermit wird eine Erleichterung beim Zusammenbau der Rohranschlußteile gegeben. Im Innenrohr 1 und im Außenrohr 3 ist als Verdrehsicherung eine Nut 18 bzw. ein Keil 19 angeordnet. Das Zusammenwirken der Rohranschlußteile ist aus den Figuren 2 bis 5 ersichtlich.

In Fig. 6 ist eine weitere Ausbildungsform des erfindungsgemäßen Rohranschlusses dargestellt. Die Hülse 6 weist ein Keilstück 17 auf, das mit einem Außengewinde 16 in das Innengewinde 15 des Rohranschlußteils 5 eingeschraubt ist. Das Innenrohr 14 hat zwei gegenüberliegend angeordnete Drehsicherungen 13, die in entsprechende Ausnehmungen 12 des Außenrohres 11 eingreifen (siehe Fig. 7). Das aufgeweitete Endteil 2 des Innenrohres 14 bleibt unverändert. Das Zusammenwirken der Rohranschlußteile dieser bevorzugten Ausführungsform ist aus den Figuren 8 bis 11 ersichtlich.

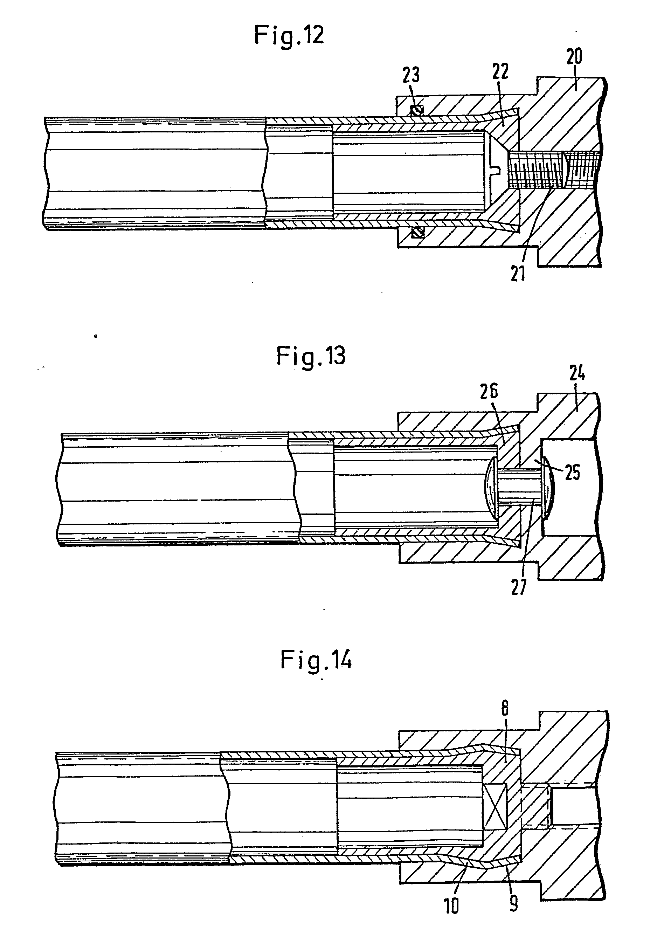

In den Figuren 12 bis 14 sind weitere Ausführungsformen des erfindungsgemäßen Rohranschlusses gezeigt. In Fig. 12 ist zwischen dem Anschlußteil 20 und dem Innenrohr ein Dichtring 23 angeordnet. Dieser soll die Verbindungsstelle des Rohranschlusses vor Umwelteinflüssen und Schadstoffen, insbesondere gegenüber Wasser, Säuren und Basen, abdichten. Die Hülse wird mit einem trichterförmigen Endstück 22 durch die Schraube 21 mit kegelförmigem Schraubenkopf im Anschlußteil 20 verankert.

In Fig. 13 ist das Anschlußteil 24 mit der Hülse 26 und dem Boden 25 des Außenrohres über einen Nietbolzen 27 verbunden. Diese Verbindung läßt sich besonders zeitsparend herstellen.

Bei der Ausführungsform nach Fig. 14 weist das Keilstück 8 einen doppelten Konus in Form eines Doppelkegels auf. In entsprechender Weise ist das Innenrohr und die Hinterschneidung 9 an der Verbindungsstelle ausgeformt. Hierdurch wird die wirksame Haftfläche zwischen den Anschlußteilen vergrößert.

Die Herstellung des erfindungsgemäßen Rohranschlusses geschieht auf folgende Weise:

1. Die Hülse wird ins Außenrohr eingesetzt und gegebenenfalls in Längsrichtung durch Schrauben oder Nieten befestigt.

2. Das Innenrohr wird in die Hülse bis zum Beginn des Keilstücks 17 eingeschoben.

3. Das Innenrohr wird durch Druck über das Keilstück 17 geschoben und dabei aufgeweitet; beim Doppelkonus wird der Querschnitt des Innenrohres auf diese Weise zunächst aufgeweitet und anschließend nach Überschreiten des größten Konusdurchmessers an der Außenwandung der Hinterschneidung verjüngt.

4. Bei Verwendung eines Klebers wird dieser vor dem Einsetzen der Hülse entweder auf die Hülse oder auf die Innenfläche des Innenrohres aufgetragen, wobei die Klebfläche je nach gewünschter Festigkeit über die gesamte Kontaktzone zwischen Hülse und Innenrohr reichen kann. Zur Erhöhung der Festigkeit kann zusätzlich Klebstoff in der Kontaktzone zwischen Außenrohr und Innenrohr aufgebracht werden.

Der in Figur 12 dargestellte Dichtring 23 zwischen Anschlußteil 20 und dem Innenrohr besteht aus üblichen Dichtmaterialien wie beispielsweise Neopren. Beim Zusammenbau des erfindungsgemäßen Rohranschlusses ist darauf zu achten, daß in Durchmesserrichtung des Dichtringes sowohl gegenüber dem Anschlußteil 20 als auch gegenüber dem Innenrohr eine vollständige Abdichtung erzielt wird. Dieses kann durch eine entsprechende Pressung des Dichtringes in Durchmesserrichtung erreicht werden.

Demgegenüber muß der Dichtring in der Längsachse des Rohranschlusses genügend Spiel haben, um bei der Montage genügend Raum für ein seitliches Ausweichen zu haben.

**Patentansprüche**

1. Rohranschluß zum Verbinden von Rohren mit Flanschen, Voll- oder Hohlprofilen, mit einem zu verbindenden Rohr (1) und einem Rohranschlußteil (5), das eine Bohrung aufweist, die an ihrer Innenwandung ein konisch, kegelig o. dgl. sich ausweitendes Ende (4) aufweist, in das der Endabschnitt (2) des zu verbindenden Rohres (1) in Zusammenwirken mit einer in das Rohranschlußteil (5) eingesetzten stirnseitig am Rohranschlußteil anliegenden Hülse (6) eindrückbar ist, dadurch gekennzeichnet, daß zwischen einem Außenrohr (3) des Rohranschlußteils (5) sowie einer in dieses eingesetzten und stirnseitig am Rohranschlußteil anliegende, steifen Hülse (6) ein zylindrischer Ringspalt mit konisch, kegelig o. dgl. sich erstreckendem inneren Ende ausgebildet und in diesem das zu verbindende Rohr als Innenrohr (1) mit seiner Stirnfläche am Rohranschlußteil anliegend mit geringer Toleranz (spielfrei) genalten ist.

2. Rohranschluß nach Anspruch 1, dadurch gekennzeichnet, daß das Innenrohr (1) und die Hülse (6) und/oder das Innenrohr (1) und das Außenrohr (3) miteinander verklebt sind.

3. Rohranschluß nach Anspruch 2, dadurch gekennzeichnet, daß zwischen dem Endteil des Innenrohres (1) und dem benachbarten Endteil der Hülse (6) Aussparungen zur Aufnahme von Klebstoff vorgesehen sind.

4. Rohranschluß nach einem der Ansprüche 1—3, dadurch gekennzeichnet, daß der Rohranschlußteil (5) mit einem konischen, kegeligen o. dgl. Zentrieransatz (7) passend in das entsprechend erweiterte Ende der Hülse (6) hineinragt.

5. Rhoranschluß nach einem der Ansprüche 1—3, dadurch gekennzeichnet, daß die Hülse (6) im Bereich ihrer konischen, kegeligen o. dgl. Erweiterung mit einem Boden versehen ist.

6. Rohranschluß nach Anspruch 5, dadurch gekennzeichnet, daß die Hülse (6) mittels eines am Boden ausgebildeten Gewindezapfens in eine dazu passende Gewindebohrung des Rohranschlußteils (5) eingeschraubt ist.

7. Rohranschluß nach einem der Ansprüche 1—6, dadurch gekennzeichnet, daß das Außenrohr (3) mit Nuten (12) versehen ist, die in entsprechend ausgeformte Drehsicherungen (13) des Innenrohres (1) eingreifen.

8. Rohranschluß nach einem der Ansprüche 1—7, dadurch gekennzeichnet, daß das Außenrohr (3) einen Sicherungssteg (10) aufweist, der in eine entsprechende Aussparung (18) des Innenrohres (1) eingreift.

9. Rohranschluß nach einem der Ansprüche 1—8, dadurch gekennzeichnet, daß im Außenrohr (3) ein das Innenrohr (1) dicht umschließender Dichtungsring (23) angeordnet ist.

10. Verfahren zur Herstellung einer Rohranschlußverbindung nach einem der Ansprüche 1 Fig. 9, bei dem eine Hülse (6) und das zu verbindende Rohr (1) in eine Bohrung im Rohranschlußteil (5) gebracht und dann das Rohrende (2) in Zusammenwirkung mit der Hülse im Bereich einer konisch, kegelig o. dgl. ausgebildeten Erweiterung (4) der Bohrung plastisch verformt wird, dadurch gekennzeichnet, daß in das zu verbindende Innenrohr (2) eine zylindrische Hülse (6) bis zu ihrem mit einer als Kegel, Konus, Doppelkonus o. dgl. ausgebildeten Erweiterung (4) versehenen Ende eingeschoben wird, dann das Innenrohr mit der Hülse in ein Außenrohr (3) des Rohranschlußteils eingeschoben wird und daß das Innenrohr über das überstehende Ende der Hülse hinweg bis an den Anschlag in das Rohranschlußteil eingetrieben wird.

11. Verfahren zur Herstellung einer Rohranschlußverbindung nach Anspruch 10, dadurch gekennzeichnet, daß in ein zylindrisches, an seinem innenliegenden Ende mit einer als Kegel, Konus, Doppelkonus o. dgl. ausgebildeten Hinterschneidung versehenes Außenrohr (3) eines Rohranschlußteiles eine außenseitig entsprechend geformte Hülse (17) geringerer Querschnittsabmessungen eingebracht und mittels Schrauben, Nieten o. dgl. (16) befestigt wird, und daß dann ein Innenrohr (1) in den zwischen dem Außenrohr und der Hülse gebildeten Ringspalt bis zum Anschlaß am Rohranschlußteil in diesen eingetrieben wird.

**Revendications**

1. Ensemble de raccordement pour tubes avec brides, pour profilés pleins ou creux, comportant un tube à raccorder (1) et une pièce de raccordement (5), qui comporte un évidement dont la surface intérieure, en son extrémité (4), s'élargit selon un profil conique, effilé ou analogue, dans lequel peut être emboîtée l'extrémité (2) du tube à raccorder (1) en coopération avec un manchon (6) engagé dans la pièce de raccordement (5) et en butée contre le fond de l'évidement de ladite pièce, caractérisé en ce que, entre une portion tubulaire saillante (3) de la pièce de raccordement (5) et le manchon rigide (6) engagé dans celle-ci en butée contre le fond de l'évidement, est ménagé un intervalle annulaire comportant une extrémité intérieure pourvue d'un profil conique, effilé ou analogue, et dans laquelle le tube à raccorder (1) servant de tube intérieur est maintenu avec une faible tolérance (sans jeu) en contact par sa surface frontale contre la pièce de raccordement.

2. Ensemble de raccordement selon la revendication 1, caractérisé en ce que le tube intérieur (1) et le manchon (6) et/ou le tube intérieur (1) et le tube extérieur (3) sont collés ensemble.

3. Ensemble de raccordement selon la revendication 2, caractérisé en ce qu'il est prévu entre l'extrémité du tube intérieur (1) et l'extrémité adjacente du manchon (6) des évidements pour recevoir de l'adhésif.

4. Ensemble de raccordement selon une des revendications 1 à 3, caractérisé en ce que la pièce de raccordement (5) pénètre avec adaptation de profil, au moyen d'un appendice de centrage conique, effilé ou analogue (7), dans l'extrémité élargie correspondant du manchon (6).

5. Ensemble de raccordement selon une des revendications 1 à 3, caractérisé en ce que le manchon (6) est pourvu d'un fond dans la zone de son élargissement conique, effilé ou analogue.

6. Ensemble de raccordement selon la revendication 5, caractérisé en ce que le fourreau (6) est vissé au moyen d'un embout fileté, formé sur le fond, dans un trou fileté correspondant de la pièce de raccordement (5).

7. Ensemble de raccordement selon une des revendications 1 à 6, caractérisé en ce que le tube extérieur (3) est pourvu de rainures (12) qui coopèrent avec des saillies de blocage anti-rotation (13) de forme correspondante, du tube intérieur (1).

8. Ensemble de raccordement selon une des revendications 1 à 7, caractérisé en ce que le tube extérieur (3) comporte une nervure de blocage (19) qui peut se loger dans une rainure correspondante (18) du tube intérieur (1).

9. Ensemble de raccordement selon une des revendications 1 à 8, caractérisé en ce qu'il est prévu dans le tube extérieur (3) une bague d'étanchéité (23) entourant de façon étanche le tube intérieur (1).

10. Procédé de fabrication d'un ensemble de raccordement selon une des revendications 1 à 9, dans lequel un manchon (6) et le tube à raccorder (1) sont disposés dans un évidement d'une pièce de raccordement (5), et ensuite l'extrémité du tube (1) est déformée plastiquement, en coopération avec la manchon, dans une zone de l'évidement s'élargissant selon un profil conique, effilé ou analogue (4), caractérisé en ce que dans le tube intérieur à raccorder est engagé le manchon cylindrique (6) jusqu'à son extrémité élargie profilée comme une partie effilée, un cône, un double cône ou analogue, ensuite le tube intérieur avec le fourreau est engagé dans une portion tubulaire saillante (3) de la pièce de raccordement, et en ce que le tube intérieur continue à être emmanché sur l'extrémité dépassante du manchon jusqu'à butée contre le fond de l'évidement de la pièce de raccordement.

11. Procédé de fabrication d'un ensemble de raccordement selon la revendication 10, caractérisé en ce qu'on place dans un tube extérieur (3), dont l'alésage cylindrique se prolonge vers son extrémité intérieure par une partie en contre-dépouille de forme conique, effilée, en double cône ou analogue, un manchon (17) de profil extérieur correspondant et de plus faible section droite, qui est fixé à l'aide de vis, de rivets, ou analogues (16), et en ce qu'ensuite on engage un tube intérieur (1) dans l'intervalle annulaire formé entre le tube extérieur et le manchon jusqu'à ce qu'il vienne buter contre le fond de l'évidement.

## Claims

1. A connector assembly for flanged tubes, for solid or hollow profiles, the said connector assembly comprising the piece to be joined (1) and the connector (5), which has been hollowed out in such a way that the inside surface widens out at its interior extremity, thereby presenting a cone-shaped opening, into which can be fitted the end piece (2) of the pipe (1) with the aid of a sleeve (6), which engages within the piece to be joined (5) and abuts against the base of the cone of the said piece, characterized in that between the tubular protrusion (3) of the connector (5) and the rigid sleeve (6) engaged by jutting against the bottom of the piece to be joined, is an annulus, comprising an inside end splayed to provide a conical or similar profile, by which the tube to be connected (1) is held tightly in contact at its front end against the connector (5).

2. A connector assembly according to claim 1, characterized in that the inside tube (1) and the sleeve (6) and/or the inside tube (1) and the outside tube (3) are bonded together.

3. A connector assembly according to claim 2, characterized in that the adhesive is applied into grooves between the extremity of the sleeve (6).

4. A connector assembly according to one of the claims 1 to 3, characterized in that the connector (5) penetrates with adjustment of the profile by means of an appendage centered conically (7), splayed or similarly, in the widened extremity of the sleeve (6).

5. A connector assembly according to one of the claims 1 to 3, characterized in that the sleeve (6) has a plate at the base of the widened conical, splayed or similarly, part.

6. A connector assembly according to claim 5, characterized in that the sleeve (6) is screwed by means of a threaded tip, formed at its base, into a corresponding threaded hole of the connector (5).

7. A connector assembly according to one of claims 1 to 6, characterized in that the outside tube (3) is provided with grooves (12) which correspond with protrusions (13) on the inside tube (1) to prevent rotation.

8. A connector assembly according to one of claims 1 to 7, characterized in that the outside tube (3) has a blocking rib which can lodge in a corresponding groove (18) in the inside tube (1).

9. A connector assembly according to one of claims 1 to 8, characterized in that between the outside tube (3) and the inside tube (1) is a tightly fitting sealing ring (23).

10. A process for making a connector assembly according to one of claims 1 to 9, in which a sleeve (6) and the tube to be connected (1) fit into a hollowing in the connector (5), the outside of the tube (1) and the sleeve (6) being plastically deformed in a widened zone hollowed out to a conical shape, splayed or similarly (4), in which the cylindrical sleeve (6) of the inside connector piece engages in a tubular protruding part (3) of the connector (5), and in that the inside tube continues to be fitted on the extremity of the sleeve until it butts against the bottom of the widening (4) of the connector (5).

11. A process for making a connector assembly according to claim 10, characterized in that placed in an external tube (3), of which the cylindrical bore extends towards its internal extremity widening inwards in an inverse cone, splayed, double cone or similarly, is a sleeve (17), of corresponding profile and weaker straight section, which is fixed using screws, rivets or such similar means (16), and an inside tube (1) is then engaged in the annulus formed between the outside tube and the sleeve until it butts against the bottom of the hollowed end of the connector (1).

0 028 671

Fig.2

Fig.1

Fig.11

Fig.10

Fig.3
(A-A)

Fig.4

F Fig.9

Fig.6

Fig.5

Fig.8 (B-B)

Fig.7

1

**Fig.12**

**Fig.13**

**Fig.14**